# EUROPÄISCHE PATENTSCHRIFT

(11) **EP 3 775 625 B1**
(45) Veröffentlichungstag und Bekanntmachung des Hinweises auf die Patenterteilung: **16.10.2024**
(21) Anmeldenummer: 19715877.7
(22) Anmeldetag: 01.04.2019
(51) Int. Cl.: F16H 63/34

(54) **PARKSPERRENBETÄTIGUNGSEINHEIT UND DAMIT AUSGESTALTETE PARKSPERRENEINHEIT**
PARKING LOCK ACTUATION UNIT AND PARKING LOCK UNIT DESIGNED THEREWITH
UNITÉ DE COMMANDE DE FREIN DE STATIONNEMENT ET UNITÉ DE FREIN DE STATIONNEMENT ÉQUIPÉE DE CELLE-CI

(30) Priorität: 05.04.2018 DE 202018101834 U
(43) Veröffentlichungstag der Anmeldung: 17.02.2021
(73) Patentinhaber: Hugo Benzing GmbH & Co. KG, 70825 Korntal-Münchingen (DE)
(72) Erfinder: WEZELS, Anton, 70825 Korntal-Münchingen (DE)
(74) Vertreter: Fleck, Hermann-Josef
(86) Internationale Anmeldenummer: PCT/EP2019/058201
(87) Internationale Veröffentlichungsnummer: WO 2019/192967

(56) Entgegenhaltungen:
- DE-A1- 102010 054 911
- DE-A1- 102011 086 547
- DE-A1- 102012 012 673
- DE-A1- 102016 111 596
- DE-A1- 102016 214 682
- US-A1- 2015 025 750
- US-A1- 2015 252 897

## Beschreibung

Die Erfindung bezieht sich auf eine Parksperrenbetätigungseinheit mit einem Betätigungskörper, in dem ein translatorisch in Richtung seiner Längsachse mittels einer Antriebseinheit bewegbares Verstellglied gelagert ist, welches mit einem ausgangsseitigen Verbindungsabschnitt zum Anschließen eines Auslenkmechanismus für das Einlegen und Freigeben eines mit einem Parksperrenrad zusammenwirkenden Blockierelements versehen ist, sowie auf eine damit ausgestaltete Parksperreneinheit.

Eine Parksperrenbetätigungseinheit dieser Art ist der DE 10 2012 012 673 A1 entnehmbar. Die dabei gezeigte Parksperre weist eine Betätigungseinheit auf, die ein linear verschiebbares Verstellglied in Form eines Rohrelements umfasst, welches translatorisch mittels eines rotierenden Antriebs über eine Schaltwalze und einen Schaltwalzenantrieb bewegt wird. Die Umsetzung der Rotationsbewegung in die translatorische Bewegung des Verstellglieds erfolgt mittels einer in der Schaltwalze ausgebildeten Kulissenbahn, in die ein an dem Verstellglied angeordneter Vorsprung eingreift. In dem Verstellglied beziehungsweise Rohrelement ist ein Auslenkmechanismus mit einem Stangenelement und einem darauf gelagerten Blockierelement (Betätigungskonus) unter Arretierung gelagert, wobei der arretierte Zustand mittels eines Entriegelungsmechanismus aufgehoben werden kann.

Die DE 10 2016 111 596 A1 zeigt ebenfalls eine Parksperrenbetätigungseinheit, bei der ein Verstellglied (Zahnstange) translatorisch bei rotierendem Betrieb mittels eines Antriebsmotors verstellbar ist. Die Zahnstange ist über einen Verbindungsabschnitt an eine Parkstange gekoppelt, auf der ein Blockierelement zum Betätigen der Sperrklinke gelagert ist.

Die DE 10 2010 054 911 A1 zeigt eine translatorische Verstellung eines Verstellglieds (Zugstange) bei rotierendem Antrieb mittels eines Antriebsmotors über einen Kulissenstein mit Kulissenbahn.

In der DE 10 2016 214 682 A1 ist eine Parksperrenbetätigungseinheit mit rotierend angetriebener Verstellspindel vorgestellt, auf der eine Gewindemutter linear verschiebbar gelagert ist, welche mit einem Auslenkmechanismus zum Einlegen und Freigeben eines Stellkonus gekoppelt ist.

Eine weitere Parksperrenbetätigungseinheit ist in der DE 10 2015 002 428 A1 gezeigt. Dabei ist innerhalb eines Betätigungskörpers ein translatorisch in Richtung seiner Längsachse bewegbares Verstellglied gelagert, welches mit einem (bezüglich der Wirkrichtung) ausgangsseitig angeordneten Verbindungsabschnitt an einen Auslenkmechanismus zum Einlegen und zum Freigeben (Auslegen) eines mit dem Parksperrenrad zusammenwirkenden Blockierelements (Sperrelements) versehen ist. Das Verstellglied ist als verschiebbares Kolbenelement ausgebildet und in einem Druckraum des Betätigungskörpers innerhalb eines Druckraumgehäuses beweglich angeordnet. Ausgangsseitig ist das Kolbenelement über einen Verbindungsabschnitt mit einer Schaltstange des Auslenkmechanismus verbunden, welcher weiterhin zur Betätigung des zum formschlüssigen Eingriff in das Parksperrenrad vorgesehenen Blockierelements (Sperrelements) einen auf dieses einwirkenden, axial verschiebbaren Betätigungskonus aufwiest, der über die Schaltstange bewegungstechnisch mit dem Kolbenelement verbunden ist. Die Kolbenposition wird sensorisch über einen Wegsensor erfasst. Die Parksperrenbetätigungseinheit mit der hydraulisch arbeitenden Antriebseinheit für das Verstellglied ist auf eine bestimmte Umgebung abgestimmt und erfordert eine diesbezügliche spezielle Ausgestaltung.

In der DE 10 2011 086 547 A1 ist eine Parksperre in Verbindung mit einem Getriebe offenbart, die für eine Vielzahl von Getrieben einsetzbar und leicht verbaubar ist. Für eine kompakte Ausbildung sind die Sperrklinke und ein Betätigungselement achsparallel angeordnet. Ein z. B. als Elektromotor ausgebildeter Aktuator ist koaxial, achsparallel oder winklig zur translatorischen Kraftrichtung der Betätigungseinheit angeordnet. Bei einem Ausführungsbeispiel greift ein koaxial angeordneter Hohlwellen-Elektromotor in eine kreiszylindrische Betätigungsstange ein, die auf ihrer Radialmantelfläche ein Gewinde oder einen Kugelumlauftrieb aufweist. Das Gewinde steht als Spindel mechanisch mit einem Gegengewinde des Hohlwellen-Elektromotors im Eingriff. Gemäß einer anderen Ausführung ist die Betätigungsstange als Zahnstange ausgebildet, in deren Verzahnung ein Motorabtriebszahnrad eingreift. In allen Varianten weist die Betätigungsstange ein Sackloch auf, in dem sich eine Schraubenfeder abstützt. Die Betätigungsstange wirkt auf ein Zwischenelement ein, das mit einer Sperrklinke in Wirkverbindung steht und drei Wälzlager aufweist. Auch ist die Parksperre mit einem Sensor versehen, welcher an einer Gehäuseplatte angeordnet ist. Insgesamt sind bei einer solchen Parksperre relativ umfangreiche Vorkehrungen zu treffen, um die Funktionssicherheit zu gewährleisten.

Auch die DE 10 2016 214 682 A1 zeigt eine Parksperre für ein Kraftfahrzeuggetriebe mit einer Sperrverzahnung und einer mit dieser zusammenwirkenden, über ein Betätigungselement schwenkbaren Sperrklinke. Das Betätigungselement ist mittels einer Antriebseinheit in eine Freigabeposition und eine Sperrposition bringbar. Die Antriebseinheit weist einen Elektromotor und einen Spindelantrieb auf. Ferner ist ein Sicherheitsmechanismus vorgesehen, der bei Unterbrechung der Stromzufuhr eines Elektromagneten einer Sperranordnung aktiviert wird.

Auch die US 2003 / 0 188 595 A1 zeigt eine Parksperreneinheit mit einer Betätigungseinheit, die eine in einem Spindelgehäuse gelagerte Gewindespindel aufweist.

Eine weitere Parksperrenbetätigungseinheit mit einem in einem Betätigungskörper translatorisch bewegbaren, als Kolben ausgebildeten Verstellglied zeigt auch die DE 10 2015 116 654 A1.

Bei einer in der DE 697 07 779 T2 offenbarten weiteren Parksperrenbetätigungseinheit ist eine Parksperrenstange eines Auslenkmechanismus auf seiner von einem Blockierelement in Form einer Sperrklinke abgelegenen Seite an einen Hebelmechanismus gekoppelt, welcher eine Rastplatte und eine mit dieser verbundene Stange aufweist, die von einem Bediener zum Ändern der Betriebsstellung gedreht werden kann. Auch diese Ausgestaltung ist in besonderer Weise zum Einbau in einer vorgegebenen Umgebung des Getrieberaums ausgebildet, wobei präzise steuerungstechnische Verstellmöglichkeiten nicht ersichtlich sind.

In der US 2015/0252897 A1 und der US 2015/0025750 A1 sind Parksperrenbetätigungseinheiten gezeigt, bei denen Sensoren vorgesehen sind.

Der vorliegenden Erfindung liegt die Aufgabe zugrunde, eine Parksperrenbetätigungseinheit der eingangs genannten Art und eine damit aufgebaute Parksperreneinheit bereitzustellen, die in verschiedenen Einbausituationen einsetzbar ist und präzise steuerungstechnische Verstellmöglichkeiten bietet.

Diese Aufgabe wird durch eine Parksperrenbetätigungseinheit mit den Merkmalen des Anspruchs 1 bzw. eine Parksperreneinheit mit den Merkmalen des Anspruchs 7 gelöst.

Bei der Parksperrenbetätigungseinheit ist vorgesehen, dass das Verstellglied mit einer Verstellstruktur versehen und über diese bei rotierendem Antrieb mittels eines Antriebsmotors der Antriebseinheit translatorisch bewegbar ist. Zudem weist die Parksperrenbetätigungseinheit die im kennzeichnenden Teil des Anspruchs 1 angegebenen Merkmale auf. Erfindungsgemäß ist für eine präzise Steuerung der Verstellbewegung und Einstellposition also weiterhin vorgesehen, dass das Verstellglied ausgangsseitig in einem dem Auslenkmechanismus zugewandten oder zuzuwendenden Abschnitt mit einem Sensorteil eines Stellungssensors für einen Verstellweg versehen ist, dass zum Ankoppeln des Auslenkmechanismus an das Verstellglied der Verbindungsabschnitt über eine Adaptereinrichtung auf ein Verbindungsstück des Auslenkmechanismus abgestimmt ist, dass der Sensorteil an einer Adaptereinheit der Adaptereinrichtung angeordnet ist, wobei die Adaptereinheit unterschiedliche Verbindungsvarianten zulässt beziehungsweise einfach austauschbar ist, und dass der Antriebsmotor mittels einer Steuereinrichtung in Abhängigkeit von einem Stellungssignal des Stellungssensors steuerbar ist.

Der Betätigungskörper mit der so ausgebildeten Verstellmechanik ermöglicht mit einfachen Maßnahmen einen Einbau bei unterschiedlichen konstruktiven Umgebungsbedingungen und ergibt genau abstimmbare Steuerungsmöglichkeiten.

Auch die mit der so ausgebildeten Parksperrenbetätigungseinheit ausgestaltete Parksperreneinheit ergibt diese Vorteile und zudem eine in unterschiedlichen Umgebungen mit einfachen Maßnahmen einbaubare Baueinheit.

Vorteilhafte Ausgestaltungen der Parksperrenbetätigungseinheit bzw. Parksperreneinheit sind in den Unteransprüchen angegeben.

Hierbei besteht eine für den Aufbau und die Funktion vorteilhafte Ausbildung darin, dass die Antriebseinheit ein mit einer Antriebsstruktur versehenes, in dem Betätigungskörper axial unverschieblich gelagertes Übertragungsglied aufweist, welches mit dem Antriebsmotor rotierend antreibbar gekoppelt ist, und dass das Verstellglied die in die Antriebsstruktur formschlüssig eingreifende Verstellstruktur aufweist und mittels des Übertragungsglieds in axialer Richtung verschiebbar ist.

Eine vorteilhafte Anpassung an die dynamischen Anforderungen, wie schnelle Verstellmöglichkeit bei dauerhaft zuverlässiger Funktion, ergibt sich dabei dadurch, dass das Übertragungsglied als Gewindespindel mit der als Antriebsgewinde ausgebildeten Antriebsstruktur ausgestaltet ist und dass die Verstellstruktur als Verstellgewinde ausgestaltet ist, wobei die Gewindespindel vorzugsweise mehrere Gewindegänge aufweist. Die Steilheit der Gewindegänge kann dabei vorteilhaft an die erforderliche Verschiebegeschwindigkeit des Verstellglieds und Betätigung des Auslenkmechanismus angepasst werden. Vorzugsweise ist dabei die Steilheit des Gewindes deutlich größer als bei üblichen Schraubgewinden (Normalgewinden) und liegt z. B. im Bereich von mehr als 3° bzw. beispielsweise im Bereich von Steilgewinden.

Eine alternative vorteilhafte Ausgestaltung der Antriebseinheit besteht darin, dass das Übertragungsglied als Zahnrad oder Zahnwelle mit der als Zahnung ausgebildeten Antriebsstruktur ausgestaltet ist und dass das Verstellglied als Zahnstange mit der als Zahnung ausgebildeten Verstellstruktur ausgestaltet ist.

Eine weitere vorteilhafte Ausgestaltung besteht darin, dass der Betätigungskörper mit einem Entriegelungsmechanismus versehen ist, mittels dessen eine verriegelte Verbindung in einem Verriegelungsabschnitt zwischen dem Antriebsmotor und dem Parksperren-Auslenkmechanismus entriegelbar ist.

Ein vorteilhafter Aufbau mit sicherer Funktion wird dabei dadurch erreicht, dass die Antriebseinheit im Bereich einer Koppelstelle zwischen dem Antriebsmotor und dem Verstellglied, in dem Verstellglied oder im Verbindungsabschnitt zwischen dem Verstellglied und dem Auslenkmechanismus mit dem Verriegelungsabschnitt versehen ist.

Ein vorteilhafter Aufbau einer Parksperreneinheit besteht darin, dass der Auslenkmechanismus eine über ein Verbindungsstück an den Verbindungsabschnitt angeschlossene Auslenkstange aufweist, auf dem ein gegen eine Einrückfeder abgestützter Auslenkkonus für das Blockierelement verschieblich gelagert ist.

Eine vorteilhafte Ausgestaltung mit aufeinander genau abstimmbaren Komponenten besteht darin, dass der Auslenkmechanismus des Weiteren mit dem Blockierelement versehen ist, welches als Sperrklinke ausgebildet ist.

Vorteilhafte Maßnahmen für den Einbau werden dadurch erhalten, dass der Betätigungskörper mit dem Auslenkmechanismus als mechanisch zusammenhängende kompakte Baueinheit ausgestaltet ist.

Die Erfindung wird nachfolgend anhand von Ausführungsbeispielen unter Bezugnahme auf die Zeichnungen näher erläutert. Es zeigen:
- Fig. 1A: ein Ausführungsbeispiel für eine Parksperrenbetätigungseinheit mit einem ausgangsseitig angeschlossenen Auslenkmechanismus in perspektivischer, teilweise geschnittener Ansicht,
- Fig. 1B: die Parksperrenbetätigungseinheit nach Fig. 1A mit einem eingangsseitigen Antriebsmotor und einem ausgangsseitig angeschlossenen Auslenkmechanismus schematisch im Längsschnitt,
- Fig. 2A: ein Ausführungsbeispiel für eine erfindungsgemäße Parksperrenbetätigungseinheit mit angeschlossenem Auslenkmechanismus in perspektivischer Ansicht,
- Fig. 2B: die Parksperrenbetätigungseinheit nach Fig. 2A schematisch im Längsschnitt mit einem eingangsseitigen Antriebsmotor und mit einem ausgangsseitig angeschlossenen Auslenkmechanismus,
- Fig. 3: eine schematische Blockschaltbilddarstellung für eine Parksperrenbetätigungseinheit mit einem in der Verstellmechanik angeordneten Verriegelungsabschnitt,
- Fig. 4A: eine teilweise geschnittene perspektivische Ansicht eines Teils einer Parksperreneinheit (ohne Adaptereinrichtung) mit einem Abschnitt der Parksperrenbetätigungseinheit und einem darin angeordneten Verriegelungsabschnitt und
- Fig. 4B: eine teilweise geschnittene perspektivische Ansicht des in Fig. 4A gezeigten Verriegelungsabschnitts der Parksperrenbetätigungseinheit.

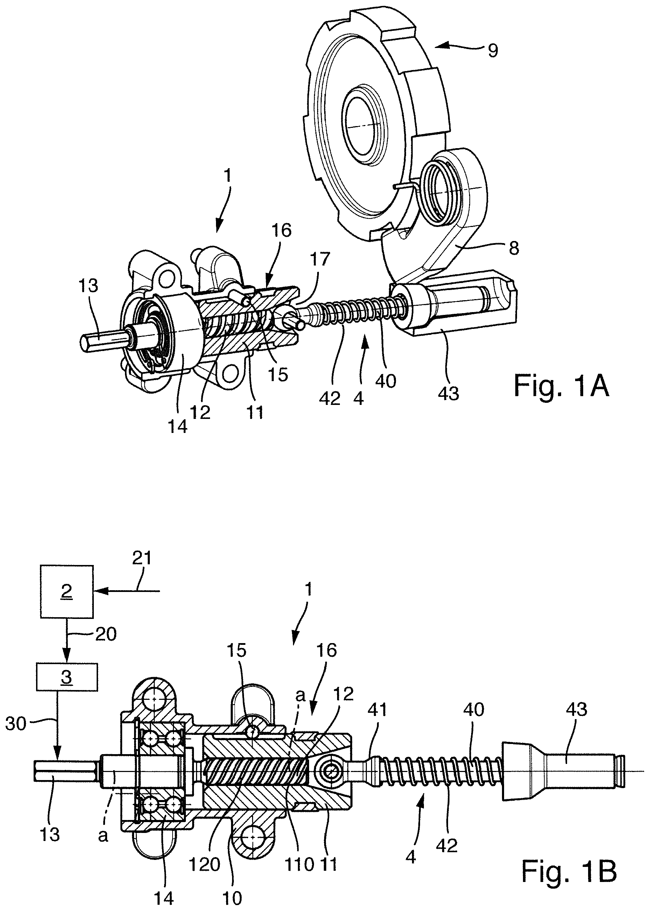

Fig. 1A und 1B zeigen ein Ausführungsbeispiel für eine Parksperrenbetätigungseinheit 1, die in Wirkrichtung eingangsseitig über eine Motorkopplung 30 an einen Antriebsmotor 3 angeschlossen ist, welcher über einen Steueranschluss 20 mit einer Steuereinrichtung 2 verbunden ist. In Wirkrichtung ausgangsseitig ist die Parksperrenbetätigungseinheit 1 über einen Verbindungsabschnitt 17 und ein Verbindungsstück 41 mit einem Auslenkmechanismus 4 gekoppelt, welcher eine Auslenkstange 40 mit einem darauf in Längsrichtung verschieblich gelagerten und mittels einer Einrückfeder 42 abgestützten Auslenkkonus 43 aufweist. Der Auslenkkonus 43 dient zum Einlegen eines Blockierelements, wie z. B. einer Sperrklinke 8, in ein Parksperrenrad 9 in einer Parkstellung. Hierzu wird der Auslenkkonus 43 in dem gezeigten Ausführungsbeispiel mittels der Einrückfeder 42 in Wirkrichtung (in der Fig. 1B nach rechts) gedrückt, so dass das Blockierelement auf den Auslenkkonus 43 aufgleitet und dadurch in die Zahnung des Parksperrenrads 9 formschlüssig eingelegt und darin gehalten wird. Die Einrückfeder 42 bewirkt, dass der Auslenkkonus 43 beim Einrücken relativ zur Auslenkstange 40 zurückgleiten kann, wenn das Blockierelement beim Einrücken auf einen Zahn trifft, und dass anschließend der Auslenkkonus 43 wieder vorgleitet und das Blockierelement in die nachfolgende Zahnlücke drückt. Zum Freigeben der Sperrstellung (Auslegen des Blockierelements) wird der Auslenckonus 43 mittels der Auslenkstange 40 entgegen der Einlegerichtung zurückgeschoben, so dass das entgegen der Einrückrichtung federvorgespannte Blockierelement aus der Zahnung des Parksperrenrads 9 ausrückt.

Die Parksperrenbetätigungseinheit 1 weist einen Betätigungskörper mit einem Gehäuse 10 auf, in dem ein Verstellglied 11 in Richtung einer Längsachse a verschieblich gelagert ist. Zum Erzeugen der Verschiebebewegung dient eine Antriebseinheit, welche ein Übertragungsglied 12 mit einer Antriebsstruktur aufweist, die in eine angepasste Verstellstruktur des Verstellglieds 11 formschlüssig eingreift. Das Übertragungsglied 12 ist über die Motorkopplung 30 mit einem Koppelglied 13 gekoppelt und wird mittels des Antriebsmotors 3 rotierend angetrieben und bewegt dabei das verschieblich in dem Gehäuse 10 gelagerte Verstellglied 11. Das Übertragungsglied 12 ist bei diesem Ausführungsbeispiel als drehbar aber axial unverschieblich in dem Gehäuse 10 mittels einer Lagereinheit 14 gelagerte Gewindespindel mit einem Spindelgewinde beziehungsweise Antriebsgewinde 120 ausgebildet. Das Übertragungsglied 12 und das Verstellglied 11 sind somit Teil einer in dem Gehäuse 10 gelagerten Verstellmechanik 16.

Die Verstellstruktur des Verstellglieds 11 ist als ein an das Antriebsgewinde 120 angepasstes Verstellgewinde 110 ausgebildet und das Verstellglied 11 ist in dem Gehäuse 10 relativ zu diesem unverdrehbar aber axial verschieblich gehalten, wozu beispielsweise eine eingesetzte Verdrehsicherung 15 vorhanden ist, die jedoch die translatorische Bewegung zum linearen Verschieben des Verstellglieds 11 zulässt, wobei der Verstellweg durch beiderseitige Anschläge sowohl in einer zur Ausgangsseite hin gerichteten Vorwärtsbewegung als auch in entgegengesetzter Rückwärtsbewegung begrenzt ist.

Zum Erreichen einer möglichst schnellen Bewegung des Verstellglieds 11 beziehungsweise einer hohe Dynamik sind das Spindelgewinde 120 (Antriebsgewinde) und entsprechend das Verstellgewinde 110 im Vergleich zu einem üblichen Schraubgewinde relativ steil ausgebildet, steiler als 3° Steigung, wie z. B. Steilgewinde.

Über das ausgangsseitig mit dem Verbindungsabschnitt 17 versehene Verstellglied 11 wird die über das Verbindungsstück 41 an dem Verstellglied 11 angeschlossene Auslenkstange 40 und damit der Auslenkkonus 43 zum Einlegen der Parksperre durch Betätigen des Blockierelements in dem gezeigten Ausführungsbeispiel in Vorwärtsrichtung in Richtung zur Ausgangsrichtung hin geschoben und zum Freigeben, beziehungsweise Auslegen der Parksperre zurückbewegt.

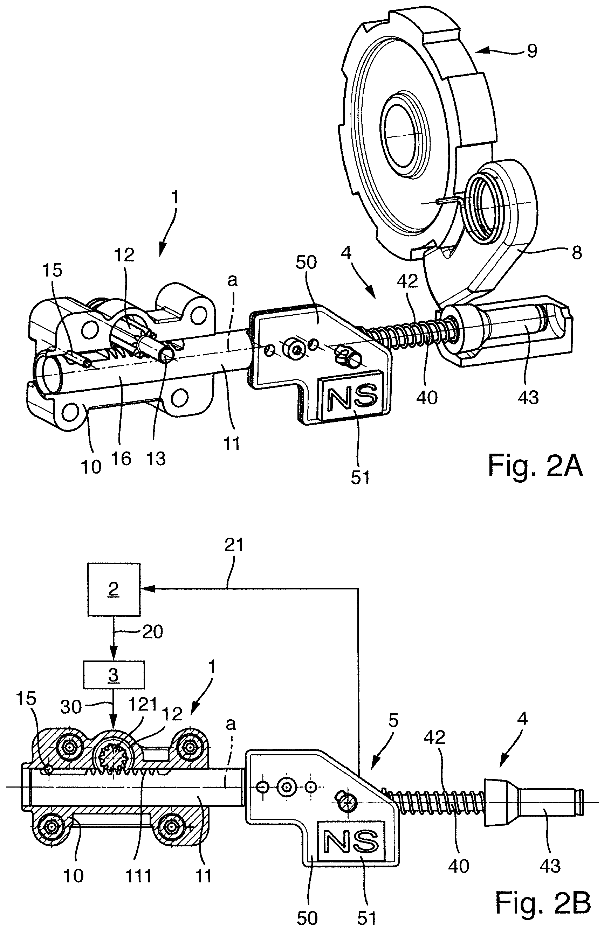

Bei einer alternativen Ausgestaltung kann der Auslenkkonus 43 mit seinen Auslenkschrägen in entgegengesetzter Richtung wirkend ausgestaltet sein, wie z. B. die DE 10 2016 124 391.4 (nicht vorveröffentlicht) zeigt. Bei einer solchen Ausgestaltung wird also das Einlegen der Parksperre durch Verschieben des Verstellglieds 11 in Rückwärtsrichtung (von der Ausgangsseite weg gerichtet) und das Auslegen durch Verschieben des Verstellglieds 11 in Vorwärtsrichtung (zur Ausgangsseite hin gerichtet) bewirkt. Auch andere Ausbildungen des Auslenkmechanismus sind denkbar. Zum Ankoppeln des Auslenkmechanismus an das Verstellglied 11 muss lediglich der Verbindungsabschnitt auf das Verbindungsstück 41 des Auslenkmechanismus abgestimmt werden. Dies kann vorteilhaft über eine Adaptereinrichtung 5 geschehen, wie in Fig. 2A und 2B beispielhaft gezeigt.

Um die Parksperrenbetätigungseinheit 1 an unterschiedliche Auslenkmechanismen anzupassen, kann ferner die Steuereinrichtung 2 zum Ansteuern des Antriebsmotors 3 geeignet programmiert werden. Um den Verstellweg des Auslenkkonus 43 beziehungsweise eines anderen Auslenkglieds anforderungsgerecht in Abhängigkeit von einer jeweiligen Einbausituation zu steuern, wird der Steuereinrichtung 2 z. B. über einen Eingangsanschluss 21 ein den Verstellweg anzeigendes Eingangssignal beziehungsweise Sensorsignal zugeführt, das von einem geeigneten Stellungssensor mit einem Sensorteil 51 (siehe Fig. 2A und 2B) geliefert wird.

Ähnlich wie bei dem Ausführungsbeispiel nach Fig. 1A, 1B kann bei einer Ausführungsvariante der Verstellmechanik 16 die mit dem Innengewinde (dann Antriebsgewinde) versehene Mutter das axial unverschieblich, aber drehbar in dem Gehäuse 10 des Betätigungskörpers gelagerte Übertragungsglied 12 bilden und die Gewindespindel mit dem in das Innengewinde formschlüssig eingreifenden Spindelgewinde (dann Verstellgewinde) als axial verschieblich, aber unverdrehbar in dem Gehäuse 10 gelagertes Verstellglied 11 ausgebildet sein.

Fig. 2A und 2B zeigt ein Ausführungsbeispiel für eine erfindungsgemässe Parksperrenbetätigungseinheit 1. Gegenüber der Fig. 1A, 1B ist die Antriebseinheit mit der Verstellmechanik 16 unterschiedlich aufgebaut. Das über eine Motorkopplung 30 an den Antriebsmotor 3 angekoppelte Übertragungsglied 12 ist dabei als ein Zahnrad oder eine Zahnwelle 121 ausgebildet, wobei die Antriebsstruktur als Zahnung ausgeführt ist. Das Verstellglied 11 ist als Zahnstange mit einer an die Zahnung des Übertragungsglieds 12 angepassten Zahnung 111 ausgebildet. Das von dem Antriebsmotor 3 rotierend antreibbare Übertragungsglied 12 ist axial unverschieblich bezüglich des Gehäuses 10 und mit seiner Antriebsachse rechtwinklig zur Längsachse a des Verstellglieds 11 in dem Gehäuse 10 gelagert. Das in dem Gehäuse 10 verschieblich in Richtung der Längsachse a gelagerte Verstellglied 11 ist mit seiner Zahnung 111 formschlüssig in die Zahnung des Übertragungsglieds 12 in Eingriff gebracht. Beim Drehen des Übertragungsglieds 12 kann das Verstellglied 11 in Vorwärtsrichtung (in Richtung der Ausgangsseite) und in entgegengesetzter Richtung beziehungsweise Rückwärtsrichtung bewegt werden, um die entsprechend dem ersten Ausführungsbeispiel an das Verstellglied 11 angeschlossene Auslenkstange 40 mit der Einrückfeder 42 und dem Auslenkkonus 43 zum Einlegen beziehungsweise Auslegen der Parksperre zu bewegen.

Wie im Zusammenhang mit dem Ausführungsbeispiel gemäss Fig. 1A, 1B beschrieben, kann der Auslenkmechanismus auch im Zusammenhang mit dem Ausführungsbeispiel nach Fig. 2A, 2B in anderer Weise (vgl. Fig. 1A, 1B) ausgeführt sein.

Die Verbindung zwischen dem Verstellglied 11 und dem Auslenkmechanismus erfolgt wiederum über einen ausgangsseitigen Verbindungsabschnitt 17 des Verstellglieds 11 und ein Verbindungsstück 41 im zugekehrten Bereich der Auslenkstange 40. Die Verbindung besteht in einer Adaptereinrichtung 5 mit einer Adaptereinheit 50, die unterschiedliche Verbindungsvarianten zulässt beziehungsweise einfach austauschbar ist. Der Verstellweg wird über den Stellungssensor mit dem Sensorteil 51, das vorteilhaft an der Adaptereinheit 50 angeordnet ist, über die Steuereinrichtung 2, der das Sensorsignal zugeführt wird, präzise gesteuert. Durch entsprechende Programmierung kann die Parksperrenbetätigungseinheit 1 auch bei dieser Ausführung vorteilhaft an unterschiedliche Einbausituationen angepasst werden.

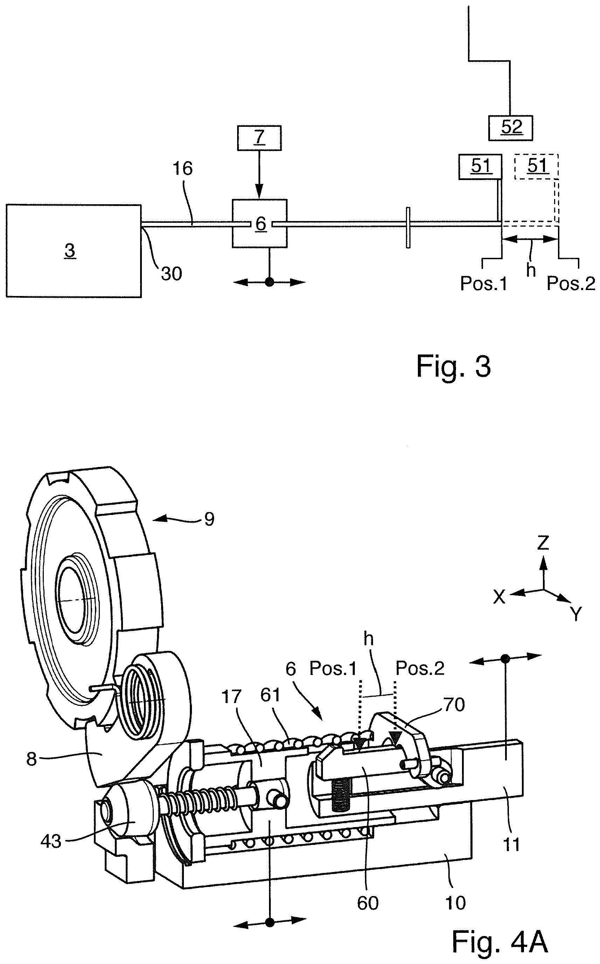

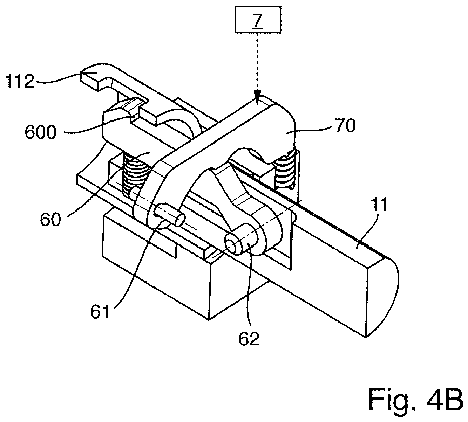

Die in den vorangehenden Ausführungsbeispielen gezeigte Parksperrenbetätigungseinheit bzw. Parksperreneinheit weist beispielhaft eine starre Verbindung innerhalb der Verstellmechanik 16 und damit zwischen der Antriebseinheit und dem Auslenkmechanismus 4 auf. Um zu gewährleisten, dass beispielsweise auch bei einem Ausfall bzw. einem Blockieren der Antriebseinheit die Parksperre sicher eingelegt wird, besteht eine weitere vorteilhafte Ausgestaltung darin, dass zwischen der Antriebseinheit und dem Auslenkmechanismus ein starrer, aber entriegelbarer Verriegelungsabschnitt 6 angeordnet ist, der mittels eines Entriegelungsmechanismus 7 entriegelbar ist, wie in den Fig. 3, 4A und 4B gezeigt.

Bei dem in Fig. 3 schematisch gezeigten Ausführungsbeispiel ist dabei der Verriegelungsabschnitt 6 im Bereich der Verstellmechanik 16 angeordnet. Nach dem Entriegeln mittels des Entriegelungsmechanismus 7, beispielsweise bei einem Blockieren der Antriebseinheit, wird der in Wirkrichtung dem Auslenkmechanismus 4 zugekehrte Abschnitt der Verstellmechanik 16, also z. B. des Verstellglieds 11, mittels einer (in Fig. 4A) gezeigten Hubfeder 61 um einen Verstellhub h verschoben. Diese Verstellbewegung wird mittels des Positionssensors mit dem Sensorteil 51 und dem weiteren Sensorteil 52 erfasst. Durch diese Verstellung wird der Auslenkkonus 43 so verschoben, dass das Blockierelement beispielsweise in Form der Sperrklinke 8 in das Parksperrenrad 9 eingerückt wird.

In Fig. 4A und 4B ist ein Ausführungsbeispiel für den Verriegelungsabschnitt 6 und einen Teil des Entriegelungsmechanismus 7 gezeigt. Der Verriegelungsabschnitt 6 weist dabei einen an dem Verstellglied 11 schwenkbar in einer Drehachse 62 gelagerten Rastierhebel 60 auf, der im Normalbetrieb in einen Verstellteil 112 des Verstellglieds 11 eingerastet ist. Der Verstellteil 112 bildet dabei z. B. einen in Wirkrichtung dem mit der Verstellstruktur versehenen Abschnitt des Verstellglieds 11 vorgelagerten Teil des Verstellglieds 11 und ist mittels der Hubfeder 61 gegen das Gehäuse 10 abgestützt. Der Rastierhebel 60 kann mittels eines Entriegelungshebels 70 des Entriegelungsmechanismus 7 ausgelenkt werden, um den Verstellteil 112 gegenüber dem mit der Verstellstruktur versehenen Abschnitt des Verstellglieds 11 zu entriegeln bzw. zu entrasten. Die Hubfeder 61 drückt dann den Verstellteil 112 mit dem daran über den Verbindungsabschnitt 17 angeschlossenen Auslenkkonus 43 in die Einrückstellung, in der das Blockierelement bzw. die Sperrklinke 8 in das Parksperrenrad 9 eingerückt wird. Der Entriegelungsmechanismus 7 weist dabei z. B. eine elektromechanische Entriegelungseinheit auf, über die der Entriegelungshebel 70 betätigt wird. Der Entriegelungshebel 70 ist an einer weiteren Drehachse 71 schwenkbar gelagert, die beispielsweise ortsfest bzgl. des Gehäuses 10 angeordnet ist. Die Drehachse 62 hingegen ist an dem mit der Verstellstruktur versehenen Abschnitt des Verstellglieds 11 ortsfest angeordnet, da der Rastierhebel 60 mit diesem Abschnitt mitgeführt wird. Der Rastierhebel 60 ist in der Verriegelungsstellung mittels einer Feder vorgespannt. Der Entriegelungshebel 70 ist in Verriegelungsrichtung bzw. entgegen der Entriegelungsrichtung mittels einer weiteren Feder vorgespannt.

Mit der beschriebenen und in den Figuren gezeigten Parksperrenbetätigungseinheit 1 kann zusammen mit dem Auslenkmechanismus eine Parksperreneinheit als kompakte Baueinheit aufgebaut werden. Dabei sind mit wenigen Teilen unterschiedliche Anpassungsmöglichkeiten an jeweilige Einbauumgebungen möglich. Die Parksperrenbetätigungseinheit 1 und eine damit aufgebaute Parksperreneinheit lassen sich dadurch für verschiedene Einsatzzwecke als Bausatz bereitstellen.

## Patentansprüche

1. Parksperrenbetätigungseinheit (1) mit einem Betätigungskörper, in dem ein translatorisch in Richtung seiner Längsachse (a) mittels einer Antriebseinheit bewegbares Verstellglied (11) gelagert ist, welches mit einer Verstellstruktur versehen und über diese bei rotierendem Antrieb mittels eines Antriebsmotors (3) der Antriebseinheit translatorisch bewegbar ist und mit einem ausgangsseitigen Verbindungsabschnitt (17) zum Anschließen eines Auslenkmechanismus (4) für das Einlegen und Freigeben eines mit einem Parksperrenrad (9) zusammenwirkenden Blockierelements versehen ist,
**dadurch gekennzeichnet,**
**dass** das Verstellglied (11) ausgangsseitig in einem dem Auslenkmechanismus zugewandten oder zuzuwendenden Abschnitt mit einem Sensorteil (51) eines Stellungssensors für einen Verstellweg versehen ist,
**dass** zum Ankoppeln des Auslenkmechanismus (4) an das Verstellglied (11) der Verbindungsabschnitt (17) über eine Adaptereinrichtung (5) auf ein Verbindungsstück (41) des Auslenkmechanismus abgestimmt ist,
**dass** der Sensorteil (51) an einer Adaptereinheit (50) der Adaptereinrichtung (5) angeordnet ist, wobei die Adaptereinheit (50) unterschiedliche Verbindungsvarianten zulässt beziehungsweise einfach austauschbar ist, und
**dass** der Antriebsmotor (3) mittels einer Steuereinrichtung (2) in Abhängigkeit von einem Stellungssignal des Stellungssensors steuerbar ist.

2. Parksperrenbetätigungseinheit nach Anspruch 1,
**dadurch gekennzeichnet,**
**dass** die Antriebseinheit ein mit einer Antriebsstruktur versehenes, in dem Betätigungskörper axial unverschieblich gelagertes Übertragungsglied (12) aufweist, welches mit dem Antriebsmotor (3) rotierend antreibbar gekoppelt ist, und
**dass** das Verstellglied (11) die in die Antriebsstruktur formschlüssig eingreifende Verstellstruktur aufweist und mittels des Übertragungsglieds (12) in axialer Richtung verschiebbar ist.

3. Parksperrenbetätigungseinheit nach Anspruch 2,
**dadurch gekennzeichnet,**
**dass** das Übertragungsglied (12) als Gewindespindel mit der als Antriebsgewinde (120) ausgebildeten Antriebsstruktur ausgestaltet ist und
**dass** die Verstellstruktur als Verstellgewinde (110) ausgestaltet ist.

4. Parksperrenbetätigungseinheit nach Anspruch 2,
**dadurch gekennzeichnet,**
**dass** das Übertragungsglied (12) als Zahnrad oder Zahnwelle (121) mit der als Zahnung ausgebildeten Antriebsstruktur ausgestaltet ist und
**dass** das Verstellglied (11) als Zahnstange mit der als Zahnung (111) ausgebildeten Verstellstruktur ausgestaltet ist.

5. Parksperrenbetätigungseinheit nach einem der vorhergehenden Ansprüche,
**dadurch gekennzeichnet,**
**dass** der Betätigungskörper mit einem Entriegelungsmechanismus versehen ist, mittels dessen eine verriegelte Verbindung in einem Verriegelungsabschnitt (6) zwischen dem Antriebsmotor (3) und dem Parksperren-Auslenkmechanismus (4) entriegelbar ist.

6. Parksperrenbetätigungseinheit nach Anspruch 5,
**dadurch gekennzeichnet,**
**dass** die Antriebseinheit im Bereich einer Koppelstelle zwischen dem Antriebsmotor (3) und dem Verstellglied (11), in dem Verstellglied oder im Verbindungsabschnitt zwischen dem Verstellglied (11) und dem Auslenkmechanismus mit dem Verriegelungsabschnitt (6) versehen ist.

7. Parksperreneinheit mit einer Parksperrenbetätigungseinheit nach einem der vorhergehenden Ansprüche,
**dadurch gekennzeichnet,**
**dass** der Auslenkmechanismus (4) eine über ein Verbindungsstück (41) an den Verbindungsabschnitt (17) angeschlossene Auslenkstange (40) aufweist, auf dem ein gegen eine Einrückfeder (42) abgestützter Auslenkkonus (43) für das Blockierelement verschieblich gelagert ist.

8. Parksperreneinheit nach Anspruch 7,
**dadurch gekennzeichnet,**
**dass** der Auslenkmechanismus des Weiteren mit dem Blockierelement versehen ist, welches als Sperrklinke (8) ausgebildet ist.

9. Parksperreneinheit nach Anspruch 7 oder 8,
**dadurch gekennzeichnet,**
**dass** der Betätigungskörper mit dem Auslenkmechanismus als mechanisch zusammenhängende kompakte Baueinheit ausgestaltet ist.

## Claims

1. Parking lock actuation unit (1) having an actuation body in which an adjusting member (11) is mounted, which can be moved translationally in the direction of its longitudinal axis (a) by means of a drive unit, is provided with an adjusting structure and can be moved translationally via this structure when driven in rotation by means of a drive motor (3) of the drive unit and is provided with an output-side connecting portion (17) for connecting a deflection mechanism (4) for engaging and releasing a blocking element which interacts with a parking lock gear (9),
**characterized**
**in that** the adjusting member (11) is provided on the output side in a portion which faces or is to be faced toward the deflection mechanism and has a sensor part (51) of a position sensor for an adjusting path,
**in that** the connecting portion (17) is matched to a connecting piece (41) of the deflection mechanism via an adapter device (5) in order to couple the deflection mechanism (4) to the adjusting member (11),
**in that** the sensor part (51) is arranged on an adapter unit (50) of the adapter device (5), the adapter unit (50) allowing different connection variants or being easily exchangeable, and
**in that** the drive motor (3) can be controlled by means of a control device (2) depending on a position signal from the position sensor.

2. Parking lock actuation unit according to claim 1,
**characterized**
**in that** the drive unit has a transmission member (12) which is provided with a drive structure, is mounted axially immovably in the actuation body and is coupled to the drive motor (3) in a rotationally drivable manner, and in that the adjusting member (11) has the adjusting structure which engages form-fittingly in the drive structure and is movable in the axial direction by means of the transmission member (12).

3. Parking lock actuation unit according to claim 2,
**characterized**
**in that** the transmission member (12) is designed as a threaded spindle having the drive structure designed as a drive thread (120), and in that the adjusting structure is designed as an adjusting thread (110).

4. Parking lock actuation unit according to claim 2,
**characterized**
**in that** the transmission member (12) is designed as a gear wheel or splined shaft (121) having the drive structure designed as toothing, and in that the adjusting member (11) is designed as a rack having the adjusting structure designed as toothing (111).

5. Parking lock actuation unit according to any of the preceding claims,
**characterized**
**in that** the actuation body is provided with an unlocking mechanism by means of which a locked connection in a locking portion (6) between the drive motor (3) and the parking lock deflection mechanism (4) can be unlocked.

6. Parking lock actuation unit according to claim 5,
**characterized**
**in that** the drive unit is provided with the locking portion (6) in the region of a coupling point between the drive motor (3) and the adjusting member (11), in the adjusting member or in the connecting portion between the adjusting member (11) and the deflection mechanism.

7. Parking lock unit having a parking lock actuation unit according to any of the preceding claims,
**characterized**
**in that** the deflection mechanism (4) has a deflection rod (40) which is connected to the connecting portion (17) via a connecting piece (41) and on which a deflection cone (43) for the blocking element is movably mounted, which cone is supported against an engaging spring (42).

8. Parking lock unit according to claim 7,
**characterized**
**in that** the deflection mechanism is further provided with the blocking element which is designed as a pawl (8).

9. Parking lock unit according to claim 7 or claim 8,
**characterized**
**in that** the actuation body having the deflection mechanism is designed as a mechanically coherent, compact unit.

## Revendications

1. Unité d'actionnement de verrou de stationnement (1) comportant un corps d'actionnement dans lequel est monté un organe de réglage (11) pouvant être déplacé en translation en direction de son axe longitudinal (a) au moyen d'une unité d'entraînement, lequel organe de réglage est pourvu d'une structure de réglage et peut être déplacé en translation par l'intermédiaire de celle-ci lors d'un entraînement en rotation au moyen d'un moteur d'entraînement (3) de l'unité d'entraînement, et comportant une section de liaison (17) côté sortie pour le raccordement à un mécanisme de déviation (4) pour l'insertion et la libération d'un élément de blocage coopérant avec une roue de verrou de stationnement (9),
**caractérisée en ce**
**que** l'organe de réglage (11) est pourvu côté sortie, dans une section tournée ou devant être tournée vers le mécanisme de déviation, d'une partie de capteur (51) d'un capteur de position pour une course de réglage,
**que**, pour l'accouplement du mécanisme de déviation (4) à l'organe de réglage (11), la section de liaison (17) est adaptée à une pièce de liaison (41) du mécanisme de déviation par l'intermédiaire d'un dispositif adaptateur (5),
**que** la partie de capteur (51) est disposée sur une unité d'adaptation (50) du dispositif adaptateur (5), dans laquelle l'unité d'adaptation (50) permet différentes variantes de liaison ou est facilement interchangeable, et
**que** le moteur d'entraînement (3) peut être commandé au moyen d'un dispositif de commande (2) en fonction d'un signal de position du capteur de position.

2. Unité d'actionnement de verrou de stationnement selon la revendication 1,
**caractérisée en ce**
**que** l'unité d'entraînement présente un organe de transmission (12) pourvu d'une structure d'entraînement et monté de manière à ne pas pouvoir coulisser axialement dans le corps d'actionnement, lequel organe de transmission est accouplé au moteur d'entraînement (3) de manière à pouvoir être entraîné en rotation, et que l'organe de réglage (11) présente la structure de réglage venant en prise par complémentarité de forme dans la structure d'entraînement et peut coulisser dans la direction axiale au moyen de l'organe de transmission (12).

3. Unité d'actionnement de verrou de stationnement selon la revendication 2,
**caractérisée en ce**
**que** l'organe de transmission (12) est conçu comme une broche filetée comportant la structure d'entraînement conçue comme un filetage d'entraînement (120) et que la structure de réglage est conçue comme un filetage de réglage (110).

4. Unité d'actionnement de verrou de stationnement selon la revendication 2,
**caractérisée en ce**
**que** l'organe de transmission (12) est conçu comme une roue dentée ou un arbre denté (121) comportant la structure d'entraînement conçue comme une denture et en ce que l'organe de réglage (11) est conçu comme une crémaillère comportant la structure de réglage conçue comme une denture (111).

5. Unité d'actionnement de verrou de stationnement selon l'une des revendications précédentes, **caractérisée en ce**
**que** le corps d'actionnement est pourvu d'un mécanisme de déverrouillage au moyen duquel une liaison verrouillée peut être déverrouillée dans une section de verrouillage (6) entre le moteur d'entraînement (3) et le mécanisme de déviation de verrou de stationnement (4).

6. Unité d'actionnement de verrou de stationnement selon la revendication 5,
**caractérisée en ce**
**que** l'unité d'entraînement est pourvue de la section de verrouillage (6) dans la zone d'un point d'accouplement entre le moteur d'entraînement (3) et l'organe de réglage (11), dans l'organe de réglage ou dans la section de liaison entre l'organe de réglage (11) et le mécanisme de déviation.

7. Unité de verrou de stationnement comportant une unité d'actionnement de verrou de stationnement selon l'une des revendications précédentes,
**caractérisée en ce**
**que** le mécanisme de déviation (4) présente une tige de déviation (40) raccordée à la section de liaison (17) par l'intermédiaire d'une pièce de liaison (41), sur laquelle tige de déviation un cône de déviation (43) pour l'élément de blocage, lequel cône de déviation est appuyé contre un ressort d'enclenchement (42), est monté de manière à pouvoir coulisser.

8. Unité de verrou de stationnement selon la revendication 7,
**caractérisée en ce**
**que** le mécanisme de déviation est en outre pourvu de l'élément de blocage qui est conçu comme un cliquet de verrouillage (8).

9. Unité de verrou de stationnement selon la revendication 7 ou 8,
**caractérisée en ce**
**que** le corps d'actionnement est conçu avec le mécanisme de déviation comme une unité structurale compacte mécaniquement cohérente.
